# EUROPÄISCHE PATENTSCHRIFT

(11) **EP 1 319 311 B1**
(45) Veröffentlichungstag und Bekanntmachung des Hinweises auf die Patenterteilung: **09.06.2004**
(21) Anmeldenummer: 01962660.5
(22) Anmeldetag: 17.08.2001
(51) Int. Cl.: H04N 9/04

(54) **SENSORANORDNUNG ZUR BILDERKENNUNG**
SENSOR ARRAY FOR IMAGE RECOGNITION
ENSEMBLE CAPTEUR POUR LA RECONNAISSANCE D'IMAGES

(30) Priorität: 19.09.2000 DE 10046309
(43) Veröffentlichungstag der Anmeldung: 18.06.2003
(73) Patentinhaber: SIEMENS AKTIENGESELLSCHAFT, 80333 München (DE)
(72) Erfinder: KÖHLER, Thorsten, 93180 Deuerling (DE)
(86) Internationale Anmeldenummer: PCT/DE2001/003165
(87) Internationale Veröffentlichungsnummer: WO 2002/025741

(56) Entgegenhaltungen:
- EP-A- 0 605 898
- WO-A-00/07365
- US-A- 5 077 784
- US-B1- 6 292 212

## Beschreibung

Die Erfindung betrifft eine Sensoranordnung zur Bilderkennung gemäß dem Oberbegriff des Anspruchs 1. Es ist bekannt, in einem Kraftfahrzeug eine digitale Kamera anzuordnen, um ein Bild des Fahrers aufzunehmen, wobei das von der Kamera aufgenommene Bild des Fahrers in unterschiedlicher Weise ausgewertet werden kann.

Eine mögliche technische Anwendung besteht darin, die Kamera mit einem Bildtelefon zu verbinden, um eine Bildtelefonübertragung aus dem Kraftfahrzeug zu ermöglichen.

Eine andere technische Anwendung besteht in einer Müdigkeitserkennung, in dem während der Fahrt Bilder des Fahrergesichts aufgenommen werden, wobei beispielsweise aus der Lidschlagfrequenz der Müdigkeitszustand des Fahrers abgeleitet wird.

Schließlich kann das von der Kamera aufgenommene Bild des Fahrers auch zur Identifizierung des Fahrers verwendet werden, um beispielsweise die Benutzung des Kraftfahrzeugs nur einer bestimmten Person mit einer vorgegebenen Physiognomie freizugeben, während das Kraftfahrzeug für andere Personen gesperrt ist.

Problematisch hierbei ist, dass sowohl bei der Müdigkeitserkennung als auch bei der Personenidentifizierung möglichst genau definierte Lichtverhältnisse herrschen müssen, um eine Fehlerkennung aufgrund schwankender Lichtverhältnisse zu vermeiden. Es ist deshalb bekannt, zur Müdigkeitserkennung und zur Personenidentifizierung eine Infrarotkamera zu verwenden, so dass durch Infrarotscheinwerfer exakt definierte Beleuchtungsverhältnisse geschaffen werden können.

Nachteilig hieran ist jedoch, dass zusätzlich zu der tageslichtempflindlichen Kamera für das Bildtelefon eine Infrarotkamera für die Müdigkeiterkennung und die Personenindentifizierung erforderlich ist.

Der Erfindung liegt also die Aufgabe zugrunde, eine optische Sensoranordnung zur Bilderkennung zu schaffen, die mit einer einzigen Kamera eine Müdigkeitserkennung und eine Personenidentifizierung bei exakt definierten Lichtverhältnissen und zum anderen die Aufnahme normaler Bilder beispielsweise für ein Bildtelefon ermöglicht.

Die Aufgabe wird, ausgehend von einer bekannten Sensoranordnung gemäß dem Oberbegriff des Anspruchs 1, durch die kennzeichnenden Merkmale des Anspruchs 1 gelöst.

Dokument WO-A-00/07365 offenbart eine Sensoranordnung mit mehreren rasterförmig angeordneten optischen Sensorelementen eines ersten Typs (R, G, B) und weitere Sensorelemente (IR) eines zweiten Typs, die auf Licht im nicht sichtbaren Wellenlängenbereich ansprechen.

Dokument US-A-5077784 offenbart einen Scheinwerfer, der zur Beleuchtung eines Bildobjektes IR Licht emittiert. Jedoch wird dieser Scheinwerfer nicht in Kombination mit dem im Oberbegriff des Anspruchs 1 angegebenen Bildsensor verwendet.

Die Erfindungverwendet die allgemeine technische Lehre, in einer Sensoranordnung zur Bilderkennung mit mehreren rasterförmig angeordneten optischen Sensorelementen nicht nur Sensorelemente vorzusehen, die auf Licht im sichtbaren Wellenlängenbereich ansprechen, sondern auch Sensorelemente, die auf Licht im nicht sichtbaren Wellenlängenbereich ansprechen. Die auf Licht im sichtbaren Wellenlängenbereich ansprechenden Sensoren dienen hierbei zur Aufnahme eines normalen monochromen oder mehrfarbigen Bildes, beispielsweise für ein Bildtelefon, während die auf Licht im nicht sichtbaren Wellenlängenbereich ansprechenden Sensorelemente in der Lage sind, ein Bild des Fahrers unter exakt definierten Lichtverhältnissen aufzunehmen, da der störende Einfluss der Umgebungsbeleuchtung entfällt.

Vorzugsweise handelt es sich bei den auf Licht im nicht sichtbaren Wellenlängenbereich ansprechenden Sensorelementen des zweiten Typs um Infrarot-Sensorelemente, jedoch können die Sensorelemente des zweiten Typs auch auf Licht in anderen Wellenlängenbereichen ansprechen. Entscheidend ist lediglich, dass die Sensorelemente des zweiten Typs die normale Umge-bungsbeleuchtung nicht erfassen, damit durch eine künstliche Beleuchtung definierte Lichtverhältnisse für die Müdigkeitserkennung und die Personenidentifizierung geschaffen werden können.

Die einzelnen Sensorelemente können beispielsweise aus einer lichtempfindlichen Zelle bestehen, auf die ein Farbfilter aufgesetzt ist, wobei die auf die Sensorelemente des ersten Typs aufgesetzten Farbfilter vorzugsweise im Rot-, Grün- bzw. Blau-Bereich empfindlich sind, während die auf die Sensorelemente des zweiten Typs aufgesetzten Farbfilter vorzugsweise im Infrarot-Bereich durchlässig sind.

Vorzugsweise weist die Sensoranordnung mehrere rasterförmig nebeneinander angeordneten Module aus mindestens einem Sensorelement des ersten Typs und mindestens einem Sensorelement des zweiten Typs auf. Einzelne Module können beispielsweise quadratisch sein und drei Sensorelemente des ersten Typs aufweisen, die auf Licht in den drei Grundfarben rot, grün und blau ansprechen, sowie ein Sensorelement des zweiten Typs, das auf Licht im Infrarotbereich anspricht.

Die Sensorelemente des ersten Typs und die Sensorelemente des zweiten Typs können mit einem gemeinsamen elektrischen Ausgang verbunden sein, wobei die Trennung der verschiedenen Bilder durch eine separate Hard- oder Software erfolgt. Es ist jedoch auch möglich, dass die Sensorelemente des ersten Typs mit einem ersten elektrischen Signalausgang verbunden sind, während die Sensorelemente des zweiten Typs mit einem zweiten elektrischen Signalausgang verbunden sind, so dass die verschiedenen Bilder an den beiden Signalausgängen getrennt bereitgestellt werden.

In der bevorzugten Ausführungsform ist die Verteilungsdichte der Sensorelemente des ersten Typs wesentlich größer als die Verteilungsdichte der Sensorelemente des zweiten Typs. Mehrere Sensorelemente des ersten Typs bilden jedoch üblicherweise zusammen einen Rasterpunkt, während jedes Sensorelement des zweiten Typs vorzugsweise einen separaten Rasterpunkt bildet, so dass die Rasterdichte (Pixeldichte) für beide Typen von Sensorelementen vorzugsweise gleich groß ist.

Weiterhin ist gemäβ der Erfindung zur Beleuchtung des Bildobjekts mindestens ein Scheinwerfer vorgesehen, der Licht mit einer Wellenlänge emittiert, auf die nur die Sensorelemente des zweiten Typs ansprechen. Dies ist wichtig, damit für die Personenidentifizierung und ggf. auch für die Müdigkeitserkennung definierte Lichtverhältnisse geschaffen werden, während der Scheinwerfer die Erfassung des normalen Bildes beispielsweise für das Bildtelefon nicht stören darf. Hierzu kann der Scheinwerfer beispielsweise aus einer oder mehreren Infrarotleuchtdioden bestehen.

Darüber hinaus ist gemäβ der Erfindung vorgesehen, dass die Sensorelemente mit einer Auswahleinheit verbunden sind, die wahlweise eines der beiden Bilder auswählt, wobei die Auswahleinheit mit dem Scheinwerfer verbunden ist, um die Aktivierung des Scheinwerfers mit der Auswahl der Sensorelement zu synchronisieren. Die Beleuchtung des Bildobjektes mit Licht im nicht sichtbaren Wellenlängenbereich erfolgt deshalb vorzugsweise nur dann, wenn die Auswahleinheit auch die Sensorelemente des zweiten Typs auswählt, wohingegen der Scheinwerfer während der restlichen Zeit ausgeschaltet bleiben kann.

In einer weiteren Variante der Erfindung ist zusätzlich vorgesehen, dass die Sensorelemente mit einer Belichtungssteuerung verbunden sind, um die Belichtungszeit der Sensorelemente einzustellen. Vorzugsweise weist die Belichtungssteuerung zwei Einstellungen mit unterschiedlichen Belichtungszeiten auf. Dies ist vorteilhaft, da beispielsweise bei der Aufnahme eines Bildes für ein Bildtelefon eine längere Belichtungszeit erforderlich ist, wohingegen zur Müdigkeitserkennung sehr kurze Belichtungszeiten nützlich sind.

Gemäß einer Variante der Erfindung ist eine Abtasteinheit vorgesehen, welche die von den Sensorelementen erzeugten Bilder mit einer vorgegebenen Bildwiederholrate abtastet. Vorzugsweise tastet die Abtasteinheit abwechselnd in einem ersten Abtastschritt sowohl die Sensorelemente des ersten Typs als auch die Sensorelemente des zweiten Typs ab, während in einem anschließenden zweiten Abtastschritt nur die Sensorelemente des zweiten Typs abgetastet werden. Auf diese Weise ergeben sich für das normale RGB-Bild einerseits und das IR-Bild andererseits unterschiedliche Bildwiederholraten, was den vorstehend beschriebenen technischen Anforderungen bei den verschiedenen technischen Anwendungen gerecht wird. Typische Bildwiederholraten sind hierbei 50 Hertz für das IR-Bild und 25 Hertz für das RGB-Bild.

Weiterhin ist zu erwähnen, dass die erfindungsgemäße Sensoranordnung beispielsweise auch in mobilen Geräten wie beispielsweise in Mobiltelefonen eingesetzt werden kann. Insbesondere in UMTS-Mobiltelefonen ist ein Einsatz der erfindungsgemäßen Sensoranordnung vorteilhaft. So ermöglicht die erfindungsgemäße. Sensoranordnung in einem Mobiltelefon beispielsweise die Benutzeridentifizierung, indem ein Infrarotbild des Benutzers bei definierten IR-Beleuchtungsverhältnissen aufgenommen wird. Die Benutzung des Mobiltelefons wird dann nur freigegeben, wenn die Benutzeridentifizierung ergibt, dass der Benutzer authorisiert ist. Weiterhin ermöglicht der Einsatz der erfindungsgemäßen Sensoranordnung in einem Mobiltelefon bei schlechten Lichtverhältnissen eine Bildübertragung unter Verwendung eines Infrarotbildes.

Andere vorteilhafte Varianten und Weiterbildungen der Erfindung sind in den Unteransprüchen gekennzeichnet bzw. werden nachstehend zusammen mit der Beschreibung des bevorzugten Ausführungsbeispiels anhand der Figuren näher erläutert. Es zeigen:
- Figur 1: eine erfindungsgemäße Sensoranordnung als Blockschaltbild,
- Figur 2a: eine Rastermaske mit mehreren Sensorelementen sowie
- Figur 2b: eine alternative Rastermaske.

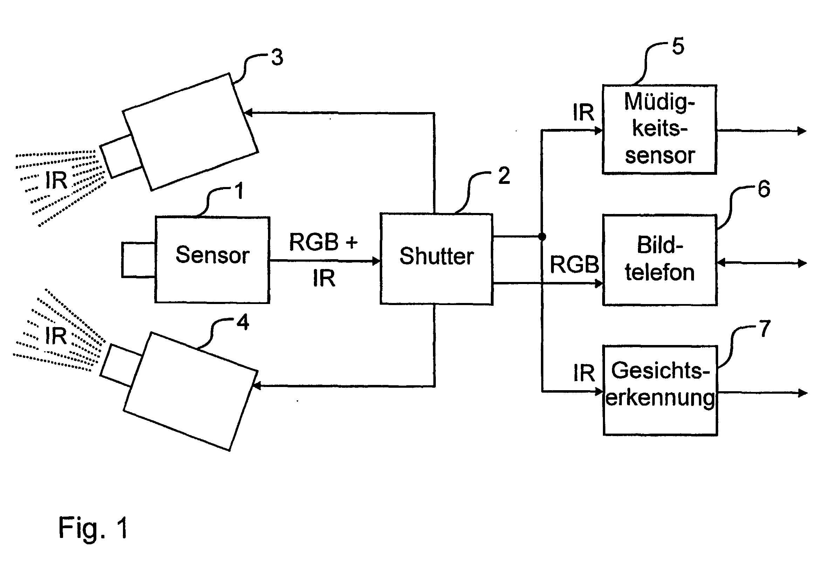

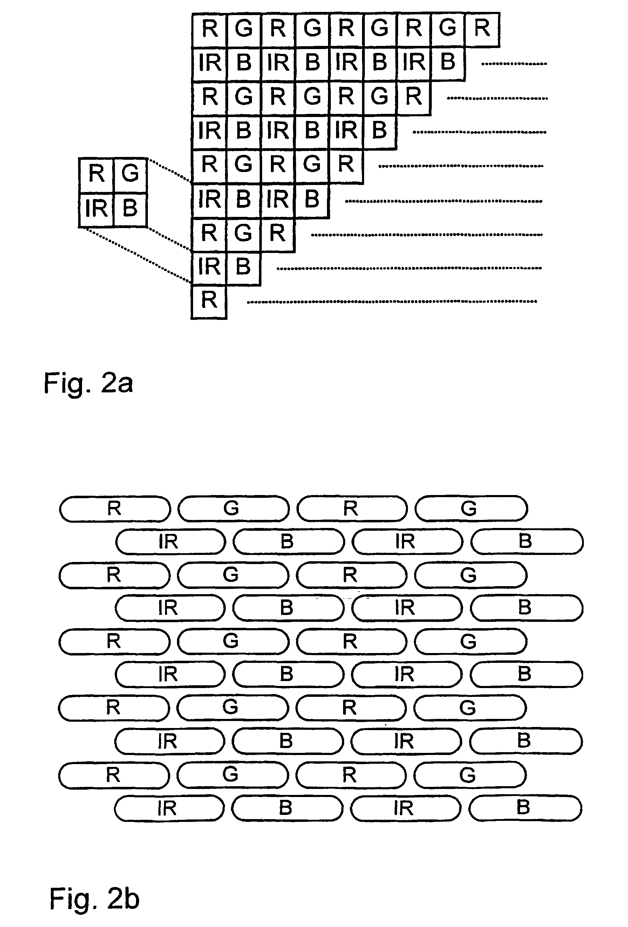

Die in Figur 1 dargestellte Sensoranordnung dient in einem Personenkraftfahrzeug zur Erfassung des Gesichts des Fahrers. Hierzu weist die Sensoranordnung einen optischen Sensor 1 auf, der in dem Kraftfahrzeug beispielsweise in der Dachverkleidung angeordnet sein kann und auf das Gesicht des Fahrers gerichtet ist. Der optische Sensor 1 weist eine Vielzahl von CCD-Sensorelementen auf, die in einer Ebene rasterförmig verteilt angeordnet sind, wie in Figur 2a dargestellt ist. Die einzelnen Sensorelemente sind bei der rasterförmigen Anordnung gemäß Figur 2a in Zeilen und Spalten angeordnet, wobei in den ungeradzahligen Zeilen jeweils abwechselnd Sensorelemente angeordnet sind, die auf rotes bzw. grünes Licht ansprechen, wohingegen in den geradzahligen Zeilen Sensorelemente angeordnet sind, die abwechselnd auf Infrarot-Licht und blaues Licht ansprechen. Die rasterförmige Anordnung gemäß Figur 2a besteht also aus einer Vielzahl von quadratischen Modulen, die zwei Sensorelemente eines auf sichtbares Licht ansprechenden ersten Typs und ein Sensorelement eines auf Infrarotlicht ansprechenden zweiten Typs enthalten.

Ausgangsseitig ist der Sensor 1 mit einer Steuer- und Auswertungseinheit 2 verbunden, die mehrere Funktionen hat, wie im folgenden beschrieben wird.

Zum einen arbeitet die Steuer- und Auswertungseinheit 2 als Abtasteinheit und tastet die einzelnen Sensorelemente nacheinander ab, wobei in jedem der Module zunächst die Sensorelemente des ersten Typs und anschließend das Sensorelement des zweiten Typs abgetastet wird.

Weiterhin dient die Steuer- und Auswertungseinheit 2 als Auswahleinheit und stellt ausgangsseitig separat ein normales Farbbild RGB und ein Infrarotbild IR bereit.

Schließlich hat die Steuer- und Auswertungseinheit 2 die Aufgabe, während der Personenidentifizierung und während der Müdigkeitserkennung definierte Lichtverhältnisse herzustellen. Hierzu ist die Steuer- und Auswertungseinheit 2 ausgangsseitig mit zwei Scheinwerfern 3, 4 verbunden, die Licht im Infrarotwellenlängenbereich in Richtung des Fahrers imitieren. Die Scheinwerfer 3, 4 bestehen aus Infrarotleuchtdioden, die zu dem Sensor 1 benachbart angeordnet sind.

Ausgangsseitig ist die Steuer- und Auswertungseinheit 2 mit einem Müdigkeitssensor 5, einem Bildtelefon 6 und einer Gesichtserkennungseinheit 7 verbunden, die zur Vereinfachung nur schematisch dargestellt sind.

Figur 2b zeigt eine alternative Anordnung der rasterförmig verteilten Sensorelemente, wobei die einzelnen Sensorelemente jeweils streifenförmig ausgebildet und angeordnet sind.

## Patentansprüche

1. Sensoranordnung zur Bilderkennung, mit
mehreren rasterförmig angeordneten optischen Sensorelementen (R,G,B) eines ersten Typs, die jeweils auf Licht im sichtbaren Wellenlängenbereich ansprechen,
wobei zusätzlich zu den Sensorelementen (R,G,B) des ersten Typs weitere Sensorelemente (IR) eines zweiten Typs vorgesehen sind, die auf Licht im nicht sichtbaren Wellenlängenbereich ansprechen,
**dadurch gekennzeichnet,**
**daß** zur Beleuchtung des Bildobjekts mindestens ein Scheinwerfer (3, 4) vorgesehen ist, der Licht mit einer Wellenlänge emittiert, auf die nur die Sensorelemente (IR) des zweiten Typs ansprechen,
**daß** zur Auswahl entweder der Sensorelemente (R,G,B) des ersten Typs oder der Sensorelemente (IR) des zweiten Typs ein Auswahleinheit (2) vorgesehen ist,
**daß** die Auswahleinheit (2) mit dem Scheinwerfer (3, 4) verbunden ist, um die Aktivierung des Scheinwerfers (3, 4) mit der Auswahl der Sensorelemente (R,G,B,IR) zu synchronisieren.

2. Sensoranordnung nach Anspruch 1,
**dadurch gekennzeichnet,**
**daß** die Sensorelemente (IR) des zweiten Typs rasterförmig zwischen den Sensorelementen (R,G,B) des ersten Typs angeordnet sind.

3. Sensoranordnung nach Anspruch 1 oder 2,
**dadurch gekennzeichnet,**
**daß** die Sensorelemente (IR) des zweiten Typs auf Licht im Infrarotbereich ansprechen.

4. Sensoranordnung nach mindestens einem der vorhergehenden Ansprüche,
**dadurch gekennzeichnet,**
**daß** die Sensorelemente (R,G,B) des ersten Typs und/oder die Sensorelemente (IR) des zweiten Typs eine lichtempfindliche Zelle und ein Farbfilter aufweisen.

5. Sensoranordnung nach mindestens einem der vorhergehenden Ansprüche,
**dadurch gekennzeichnet,**
**daß** mehrere Module aus mindestens einem Sensorelement (R,G,B) des ersten Typs und mindestens einem Sensorelement (IR) des zweiten Typs rasterförmig nebeneinander angeordnet sind.

6. Sensoranordnung nach mindestens einem der vorhergehenden Ansprüche,
**dadurch gekennzeichnet,**
**daß** die Sensorelemente (R,G,B) des ersten Typs mit einem ersten elektrischen Signalausgang verbunden sind, während die Sensorelemente ( IR) des zweiten Typs mit einem zweiten elektrischen Signalausgang verbunden sind.

7. Sensoranordnung nach mindestens einem der vorhergehenden Ansprüche,
**dadurch gekennzeichnet,**
**daß** die Verteilungsdichte der Sensorelemente (R,G,B) des ersten Typs wesentlich größer ist als die Verteilungsdichte der Sensorelemente (IR) des zweiten Typs.

8. Sensoranordnung nach Anspruch 7,
**dadurch gekennzeichnet,**
**daß** die Verteilungsdichte der Sensorelemente (R,G,B) des ersten Typs im wesentlichen dreimal so groß ist wie die Verteilungsdichte der Sensorelemente (IR) des zweiten Typs.

9. Sensoranordnung nach Anspruch 8,
**dadurch gekennzeichnet,**
**daß** der Scheinwerfer (3, 4) aus mindestens einer Infrarot-Leuchtdiode besteht.

10. Sensoranordnung nach mindestens einem der vorhergehenden Ansprüche,
**dadurch gekennzeichnet,**
**daß** die Sensorelemente (R,G,B) des ersten Typs und die Sensorelemente (IR) des zweiten Typs mit einer Belichtungssteuerung (2) verbunden sind, um die Belichtungszeit der Sensorelemente (R,G,B,IR) einzustellen.

11. Sensorariordnung nach Anspruch 10,
**dadurch gekennzeichnet,**
**daß** die Belichtungssteuerung (2) zwei Einstellungen mit unterschiedlichen Belichtungszeiten aufweist.

12. Sensoranordnung nach mindestens einem der vorhergehenden Ansprüche,
**dadurch gekennzeichnet,**
**daß** die Sensorelemente (R,G,B) des ersten Typs und/oder die Sensorelemente (IR) des zweiten Typs mit einer Abtasteinheit (2) verbunden sind, welche die von den Sensorelementen erzeugten Bilder mit einer vorgegeben Bildwiederholrate abtastet.

13. Sensoranordnung nach Anspruch 12,
**dadurch gekennzeichnet,**
**daß** die Abtasteinheit (2) abwechselnd in einem ersten Abtastschritt sowohl die Sensorelemente (R,G,B) des ersten Typs als auch die Sensorelemente (IR) des zweiten Typs abtastet und in einem anschließenden zweiten Abtastschritt nur die Sensorelemente (IR) des zweiten Typs abtastet.

14. Sensoranordnung nach mindestens einem der vorhergehenden Ansprüche,
**dadurch gekennzeichnet,**
**daß** die Sensorelemente CCD-Elemente oder CMOS-Elemente sind.

## Claims

1. Sensor array for image recognition with several optical sensor elements (R, G, B) of a first type arrayed in a grid that respond to light in the visible wavelength range in each case, in which case in addition to the sensor elements (R, G, B) of the first type further sensor elements (IR) of a second type are provided that respond to light in the non-visible wavelength range,
**characterized in that**,
for illuminating the image object at least one light (3, 4) is provided that emits light with a wavelength to which only the sensor elements (IR) of the second type respond,
that a sampling unit (2) is provided for either selecting the sensor elements (R, G, B) of the first type or the sensor elements (IR) of the second type,
that the sampling unit (2) is connected to the light (3, 4) in order to synchronize the activation of the light (3, 4) by selecting the sensor elements (R, G, B, IR).

2. Sensor array according to claim 1,
**characterized in that**,
the sensor elements (IR) of the second type are arrayed in a grid between the sensor elements (R, G, B) of the first type.

3. Sensor array according to claim 1 or 2,
**characterized in that**,
the sensor elements (IR) of the second type respond to light in the infrared range.

4. Sensor array according to at least one of the previous claims,
**characterized in that**,
the sensor elements (R, G, B) of the first type and/or the sensor elements (IR) of the second type have a light-sensitive cell and a color filter.

5. Sensor array according to at least one of the previous claims,
**characterized in that**,
several modules consisting of at least one sensor element (R, G, B) of the first type and at least one sensor element (IR) of the second type are arrayed in a grid next to one another.

6. Sensor array according to at least one of the previous claims,
**characterized in that**,
the sensor elements (R, G, B) of the first type are connected to a first electrical signal outlet whereas the sensor elements (IR) of the second type are connected to a second electrical signal outlet.

7. Sensor array according to at least one of the previous claims,
**characterized in that**,
the probability density function of the sensor elements (R, G, B) of the first type considerably exceeds the probability density function of the sensor elements (IR) of the second type.

8. Sensor array according to claim 7,
**characterized in that**,
the probability density function of the sensor elements (R, G, B) of the first type actually exceeds the probability density function of the sensor elements (IR) of the second type threefold.

9. Sensor array according to claim 8,
**characterized in that**,
the light (3, 4) consists of at least one infrared light emitting diode.

10. Sensor array according to at least one of the previous claims,
**characterized in that**,
the sensor elements (R, G, B) of the first type and the sensor elements (IR) of the second type are connected to an exposure control device (2) to adjust the exposure time of the sensor elements (R, G, B, IR).

11. Sensor array according to claim 10,
**characterized in that**,
the exposure control device (2) has two adjustments with different exposure times.

12. Sensor array according to at least one of the previous claims,
**characterized in that**,
the sensor elements (R, G, B) of the first type and/or the sensor elements (IR) of the second type are connected to a scanning unit (2) that scans the images generated by the sensor elements with a predefined image repetition rate.

13. Sensor array according to claim 12,
**characterized in that**,
the scanning unit (2) in a first scanning step scans alternately both the sensor elements (R, G, B) of the first type and the sensor elements (IR) of the second type and in a subsequent second scanning step only the sensor elements (IR) of the second type are scanned.

14. Sensor array according to at least one of the previous claims,
**characterized in that**,
the sensor elements are CCD elements or CMOS elements.

## Revendications

1. Ensemble de capteurs pour la reconnaissance d'images, comportant plusieurs éléments de capteur (R, V, B) optiques d'un premier type disposés sous forme de trame, qui réagissent respectivement à la lumière dans une gamme de longueurs d'onde visible, où en plus des éléments de capteur (R, V, B) du premier type, d'autres éléments de capteur (IR) d'un second type sont prévus, qui réagissent à la lumière dans une gamme de longueurs d'onde non visible, **caractérisé en ce que** pour l'éclairage de l'objet image, il est prévu au moins au projecteur (3, 4), qui émet de la lumière avec une longueur d'onde à laquelle seuls les éléments de capteur (IR) du second type réagissent, pour la sélection des éléments de capteur (R, V, B) du premier type, ou des éléments de capteur (IR) du second type, il est prévu une unité de sélection (2), l'unité de sélection (2) étant reliée au projecteur (3, 4), afin de synchroniser l'activation du projecteur (3, 4) avec le choix des éléments de capteur (R, V, B, IR).

2. Ensemble de capteurs selon la revendication 1, **caractérisé en ce que** les éléments de capteur (IR) du second type sont disposés sous forme de trame entre les éléments de capteur (R, V, B) du premier type.

3. Ensemble de capteurs selon la revendication 1 ou 2, **caractérisé en ce que** les éléments de capteur (IR) du second type réagissent à la lumière dans la gamme de l'infrarouge.

4. Ensemble de capteurs selon au moins l'une des revendications précédentes, **caractérisé en ce que** les éléments de capteur (R, V, B) du premier type et/ou les éléments de capteur (IR) du second type présentent une cellule photosensible et un filtre chromatique.

5. Ensemble de capteurs selon au moins l'une des revendications précédentes, **caractérisé en ce que** plusieurs modules composés d'au moins un élément de capteur (R, V, B) du premier type et d'au moins un élément de capteur (IR) du second type sont disposés côte à côte sous forme de trame.

6. Ensemble de capteurs selon au moins l'une des revendications précédentes, **caractérisé en ce que** les éléments de capteur (R, V, B) du premier type sont reliés à une première sortie de signaux électriques, tandis que les éléments de capteur (IR) du second type sont reliés à une deuxième sortie de signaux électriques.

7. Ensemble de capteurs selon au moins l'une des revendications précédentes, **caractérisé en ce que** la densité de répartition des éléments de capteur (R, V, B) du premier type est sensiblement supérieure à la densité de répartition des éléments de capteur (IR) du second type.

8. Ensemble de capteurs selon la revendication 7, **caractérisé en ce que** la densité de répartition des éléments de capteur (R, V, B) du premier type correspond pour l'essentiel à trois fois la densité de répartition des éléments de capteur (IR) du second type.

9. Ensemble de capteurs selon la revendication 8, **caractérisé en ce que** le projecteur (3, 4) se compose d'au moins une diode électroluminescente infrarouge.

10. Ensemble de capteurs selon au moins l'une des revendications précédentes, **caractérisé en ce que** les éléments de capteur (R, V, B) du premier type et les éléments de capteur (IR) du second type sont reliés à une commande d'exposition (2), afin de régler le temps d'exposition des éléments de capteur (R, V, B, IR).

11. Ensemble de capteurs selon la revendication 10, **caractérisé en ce que** la commande d'exposition (2) présente deux réglages correspondant à différents temps d'exposition.

12. Ensemble de capteurs selon au moins l'une des revendications précédentes, **caractérisé en ce que** les éléments de capteur (R, V, B) du premier type et/ou les éléments de capteur (IR) du second type sont reliés à une unité de balayage (2), qui balade les images générées par les éléments de capteur à une fréquence de rafraîchissement prédéterminée.

13. Ensemble de capteurs selon la revendication 12, **caractérisé en ce que** l'unité de balayage (2), dans une première étape de balayage, balade à tour de rôle à la fois les éléments de capteur (R, V, B) du premier type et les éléments de capteur (IR) du second type et dans une deuxième étape de balayage, balade uniquement les éléments de capteur (IR) du second type.

14. Ensemble de capteurs selon au moins l'une des revendications précédentes, **caractérisé en ce que** les éléments de capteur sont des éléments CCD ou des éléments CMOS.
